# EUROPÄISCHE PATENTSCHRIFT

(11) **EP 4 524 608 B1**
(45) Veröffentlichungstag und Bekanntmachung des Hinweises auf die Patenterteilung: **03.12.2025**
(21) Anmeldenummer: 24195138.3
(22) Anmeldetag: 19.08.2024
(51) Int. Cl.: G01B 11/02, G06Q 10/087, G01S 7/48, G01S 17/04, G06Q 10/08

(54) **SENSOR ZUM ÜBERWACHEN EINES BEREICHS**
SENSOR FOR MONITORING AN AREA
CAPTEUR POUR SURVEILLER UNE ZONE

(30) Priorität: 14.09.2023 DE 102023124838
(43) Veröffentlichungstag der Anmeldung: 19.03.2025
(73) Patentinhaber: SICK AG, 79183 Waldkirch (DE)
(72) Erfinder: Honal, Matthias, 79299 Wittnau (DE); Pischke, Tiberius, 79100 Freiburg (DE); Engesser, Raphael, 79280 Au (DE); Aiple, Manuel, 79211 Denzlingen (DE); Klein, Philipp, 79261 Gutach im Breisgau (DE)
(74) Vertreter: Manitz Finsterwald Patent- und Rechtsanwaltspartnerschaft mbB

(56) Entgegenhaltungen:
- EP-A1- 4 109 127
- US-A1- 2012 176 592

## Beschreibung

Die Erfindung betrifft einen Sensor, der dafür vorgesehen ist, einen Bereich in der Umgebung des Sensors bezüglich des Vorhandenseins mindestens eines Objekts zu überwachen.

Dabei kann es sich insbesondere um einen Lidar-Sensor (von engl.: Light Detection and Ranging) handeln.

Solche Sensoren zum Überwachen eines bestimmten Flächen- oder Raumbereichs werden beispielsweise zur Kollisionsvermeidung bei autonomen oder teilautonomen Fahrzeugen oder bei der Überwachung von Gebäuden oder Außenbereichen gegen unbefugtes Eindringen verwendet. Ferner können solche Sensoren zum Auslösen bestimmter Ereignisse eingesetzt werden, wie etwa zur Aktivierung eines Barcode- oder RFID-Lesegeräts (RFID: Radiofrequenz-Identifikation) in einem Portal, in welchem beispielsweise bestimmte Eigenschaften von Paketen ermittelt werden. Wenn die Pakete mittels eines Förderbandes zum Portal transportiert werden, detektiert ein Lidar-Sensor den jeweiligen Eintritt der Pakete in einen vorgegebenen Bereich vor dem Portal, und die Lesegeräte im Portal werden entsprechend mittels des Lidar-Sensors aktiviert, bevor das jeweilige Paket das Portal erreicht.

Um das Vorhandensein bestimmter Objekte in einem Bereich zuverlässig mittels eines solchen Sensors nachweisen zu können, ist es erforderlich, Objekte auszublenden bzw. nicht zu berücksichtigen, die eine bestimmte Größe unterschreiten bzw. deren Abmessungen unterhalb eines bestimmten Werts liegen. Solche Objekte mit geringer Größe werden als Störobjekte bezeichnet. Umgekehrt sollen nur solche Objekte in einem bestimmten Bereich mittels des Sensors nachgewiesen werden, die eine bestimmte Größe aufweisen bzw. bei denen zumindest eine Abmessung in einer Dimension einen bestimmten Wert überschreitet. Wenn der Sensor zum Ermitteln mindestens einer Abmessung eines Objekts ausgebildet ist, können beispielsweise bestimmte Parameter bei der Auswertung von Signalen, die der Sensor detektiert, derart festgelegt werden, dass nur die gewünschten Objekte, deren Größe einen vorgegebenen Wert überschreitet, in dem zu überwachenden Bereich nachgewiesen werden.

Bei bestimmten Sensoren, beispielsweise bei solchen, die auf Lidar-Systemen basieren, erfolgt eine diskrete Abtastung von Objekten innerhalb des vorbestimmten bzw. zu überwachenden Bereichs mit einzelnen Strahlen. Die Größe bzw. zumindest eine Abmessung von Objekten wird bei solchen Sensoren durch den räumlichen Abstand zumindest zweier Strahlen bei einer bestimmten Entfernung des jeweiligen Objekts bezüglich des Sensors ermittelt. Aufgrund des Auseinanderlaufens der diskreten Strahlen hängt die Anzahl der Strahlen, die auf ein Objekt trifft, von der Entfernung und der lateralen Position des Objekts bezogen auf den Sensor ab. Die Anzahl der Strahlen, die auf das Objekt treffen, kann sprunghaft abnehmen und zunehmen, wenn sich die Entfernung und die laterale Position des Objekts ändern, da beispielsweise ein oder mehrere Strahlen, die zunächst auf das Objekt treffen, bei einer Vergrößerung der Entfernung zwischen Objekt und Sensor und/oder bei einer seitlichen Verschiebung des Objekts an dem Objekt vorbeilaufen können. Dies führt dazu, dass die ermittelte Größe bzw. Abmessung des Objekts in Abhängigkeit von der Entfernung und der lateralen Position des Objekts bezogen auf den Sensor schwankt.

Wenn die minimale Abmessung bzw. Größe, ab der ein Objekt mittels des Sensors in dem vorbestimmten Bereich nachweisbar ist, nahezu genauso groß ist wie die Größe bzw. Abmessung des Objekts und sich das Objekt bezogen auf den Sensor bewegt, wird das Objekt bei bestimmten Entfernungen bezogen auf den Sensor nachgewiesen, während es bei anderen Entfernungen als Störobjekt ausgeblendet wird. Wenn der Sensor als Ausgangssignal entweder einen freien oder einen belegten Zustand des zu überwachenden Bereichs ausgibt, kann der ausgegebene Zustand für den zu überwachenden Bereich somit in kurzen Zeitabständen zwischen "frei" und "belegt" wechseln. Dies kann als "Flackern" des Überwachungszustands für den zu überwachenden Bereich bezeichnet werden. Ein solcher zeitlich schneller Wechsel zwischen den Zuständen "frei" und "belegt" ist jedoch problematisch, insbesondere zum Beispiel dann, wenn sich ein Sensor, der in ein autonomes Fahrzeug integriert ist, und ein Hindernis auf der Fahrbahn annähern und der Überwachungszustand, den der Sensor ermittelt, den Bremsvorgang des autonomen Fahrzeugs beeinflusst.

Aus der US 2012/0176592 A1 sind ein Sensor und ein Verfahren mit den Merkmalen gemäß dem jeweiligen Oberbegriff des Anspruchs 1 bzw. 9 bekannt.

Die EP 4 109 127 A1 beschreibt einen Sensor, der als Mehrlagenscanner ausgebildet ist.

Eine Aufgabe der Erfindung besteht darin, einen Sensor zu schaffen, der eine zeitlich robuste und zuverlässige Überwachung eines vorbestimmten Bereichs bezüglich des Vorhandenseins mindestens eines Objekts ermöglicht.

Diese Aufgabe wird durch einen Sensor mit den Merkmalen des Anspruchs 1 gelöst. Vorteilhafte Weiterbildungen der Erfindung sind in den Unteransprüchen, der Beschreibung und den Zeichnungen angegeben.

Der Sensor ist zum Überwachen eines Bereichs bezüglich des Vorhandenseins mindestens eines Objekts vorgesehen und umfasst eine Sendeeinrichtung, eine Empfangseinrichtung und eine Auswertungseinrichtung. Die Sendeeinrichtung emittiert Sendesignale in den zu überwachenden Bereich. Die Empfangseinrichtung empfängt Detektionssignale, die solche Sendesignale umfassen, die in dem zu überwachenden Bereich reflektiert oder remittiert werden. Die Auswertungseinrichtung ist ausgebildet, zumindest eine Messgröße, die mit zumindest einer Abmessung eines Objekts in dem zu überwachenden Bereich in Beziehung steht, anhand der Detektionssignale zu ermitteln. Die Auswertungseinrichtung ist ferner ausgebildet, einen belegten Zustand des zu überwachenden Bereichs zu ermitteln und auszugeben, wenn die zumindest eine Messgröße größer als ein Eintrittsschwellenwert ist, und einen freien Zustand des zu überwachenden Bereichs zu ermitteln und auszugeben, wenn die zumindest eine Messgröße kleiner als ein Austrittsschwellenwert ist. Der Austrittsschwellenwert ist von dem Eintrittsschwellenwert verschieden.

Der zu überwachende Bereich kann ein Flächenbereich oder ein Raumbereich in der näheren oder weiteren Umgebung des Sensors sein. Als Anfangszustand für die Ausgabe des Sensors kann zunächst der freie Zustand angenommen werden, d.h. beispielsweise dann, wenn der Sensor in Betrieb genommen wird und noch kein Objekt in dem zu überwachenden Bereich nachgewiesen haben kann. Die Auswertungseinrichtung kann ermitteln und ausgeben, dass der zu überwachende Bereich von dem freien in den belegten Zustand übergeht, wenn die Messgröße, die mit zumindest einer Abmessung eines Objekts in Beziehung steht, größer als der Eintrittsschwellenwert ist, und dass der zu überwachende Bereich von dem belegten in den freien Zustand übergeht, wenn die Messgröße kleiner als der Austrittsschwellenwert ist.

Solche Wechsel zwischen der Ausgabe des belegten und des freien Zustands des zu überwachenden Bereichs können beispielsweise dann auftreten, wenn der zu überwachende Bereich kontinuierlich mittels des Sensors überwacht wird, indem die Sendesignale mit einer bestimmten Frequenz wiederholt emittiert werden und die Detektionssignale entsprechend erfasst werden, um die Messgröße ständig neu zu ermitteln. Dies kann beispielsweise mit wiederholten Scans eines Lidar-Sensors erfolgen. Der Wechsel zur Angabe des belegten Zustands erfolgt jedoch stets nur dann, wenn die Messgröße den Eintrittsschwellenwert überschreitet, während der Wechsel zur Angabe des freien Zustands stets nur dann erfolgt, wenn die Messgröße den Austrittsschwellenwert unterschreitet.

Aufgrund der begrenzten Messgenauigkeit der Detektionssignale, die beispielsweise durch ein bestimmtes Signal-Rauschverhältnis gegeben ist, weist die Auswertungseinrichtung den belegten Zustand und den freien Zustand des zu überwachenden Bereichs jeweils gegebenenfalls auch dann nach, wenn die Messgröße gleich dem Eintrittsschwellenwert bzw. Austrittsschwellenwert ist. Es kann gemäß einer Ausführungsform auch bewusst festgelegt sein, dass auch dann der belegte Zustand und der freie Zustand des zu überwachenden Bereichs nachgewiesen bzw. angegeben wird, wenn die Messgröße gleich dem Eintrittsschwellenwert bzw. Austrittsschwellenwert ist.

Die Messgröße kann beispielsweise eine anhand der Detektionssignale geschätzte Abmessung des Objekts oder eine Anzahl von diskreten Strahlen sein, die von der Sendeeinrichtung emittiert und an zumindest einem Objekt innerhalb des Bereichs remittiert oder reflektiert werden. Der Winkelabstand der emittierten Strahlen legt die Auflösung des Sensors fest, und die Anzahl der reflektierten oder remittierten Strahlen steht daher mit der tatsächlichen Abmessung eines Objekts in dem zu überwachenden Bereich in Beziehung.

Im ersten Fall, in dem die geschätzte Abmessung bzw. Größe des Objekts betrachtet wird, muss beispielsweise die geschätzte Abmessung aller im zu überwachenden Bereich nachweisbaren Objekte einen vorbestimmten Wert unterschreiten, der den Austrittsschwellenwert repräsentiert, damit die Auswertungseinrichtung ermittelt und ausgibt, dass der zu überwachende Bereich den freien Zustand aufweist bzw. von dem belegten Zustand in den freien Zustand übergeht. Um den belegten Zustand bzw. einen Übergang in diesen mittels der Auswertungseinrichtung nachzuweisen, ist es umgekehrt beispielsweise erforderlich, dass die geschätzte Abmessung mindestens eines Objekts einen anderen, beispielsweise größeren, vorbestimmten Wert überschreitet, der den Eintrittsschwellenwert repräsentiert.

Im zweiten Fall, in dem die Anzahl der detektierten Strahlen betrachtet wird, muss die Anzahl der diskreten Strahlen, die an zumindest einem Objekt reflektiert oder remittiert werden, kleiner als eine vorbestimmte Anzahl sein, damit die Auswertungseinrichtung ermittelt und ausgibt, dass der zu überwachende Bereich den freien Zustand aufweist oder in diesen übergeht. Die vorbestimmte Anzahl der diskreten Strahlen kann beispielsweise Eins oder Zwei bzw. eine andere kleine ganze Zahl sein und repräsentiert somit den Austrittsschwellenwert. Um den belegten Zustand bzw. einen Übergang in diesen mittels der Auswertungseinrichtung nachzuweisen, ist es umgekehrt erforderlich, dass die Anzahl der detektierten diskreten Strahlen einen vorbestimmten Wert überschreitet, der den Eintrittsschwellenwert repräsentiert.

Der Begriff Eintrittsschwellenwert soll symbolisieren, dass zunächst mindestens ein Objekt in den zu überwachenden Bereich eingetreten sein muss, damit der Sensor den belegten Zustand nachweisen kann. Umgekehrt soll der Begriff Austrittsschwellenwert symbolisieren, dass alle Objekte, die eine vorbestimmte Größe überschreiten und in dem zu überwachenden Bereich vorhanden sein könnten, aus diesem ausgetreten sein müssen, damit der Sensor den freien Zustand nachweisen kann.

Ein Vorteil des Sensors besteht darin, dass zwei unterschiedliche Grenzwerte verwendet werden, um den belegten Zustand oder den freien Zustand des zu überwachenden Bereichs mittels des Sensors anzugeben. Für den Nachweis des belegten Zustands kann der vorbestimmte Eintrittsschwellenwert ausreichend groß gewählt werden, so dass Störobjekte ausgeblendet werden, die bewirken können, dass die Auswertungseinrichtung fälschlicherweise den belegten Zustand des zu überwachenden Bereichs angibt. Für den Nachweis des freien Zustands bzw. für den Übergang von dem belegten Zustand in den freien Zustand ist hingegen ein anderer vorbestimmter Wert vorgesehen, mit dem beispielsweise die geschätzte Abmessung des Objekts oder eine andere von den Detektionssignalen abgeleitete Messgröße verglichen wird, die mit der tatsächlichen Abmessung des Objekts in Beziehung steht.

Dadurch kann sichergestellt werden, dass der Nachweis des freien Zustands des Bereichs bzw. der Übergang in den freien Zustand unter Bedingungen erfolgt, die beispielsweise von einer minimalen Größe von Objekten unabhängig sind, die innerhalb des zu überwachenden Bereichs nachgewiesen werden sollen. Beispielsweise kann erst dann zugelassen werden, dass die Auswertungseinrichtung den freien Zustand des zu überwachenden Bereichs oder einen Übergang in diesen angibt, wenn nur solche Objekte in dem Bereich nachgewiesen werden, deren Abmessungen deutlich kleiner als der Eintrittsschwellenwert sind, oder wenn die Anzahl diskreter Strahlen, die an Objekten innerhalb des Bereichs reflektiert oder remittiert werden, nahezu Null ist. Dadurch kann vermieden werden, dass die Auswertungseinrichtung einen schnellen Wechsel zwischen dem belegten Zustand und dem freien Zustand des zu überwachenden Bereichs ausgibt, insbesondere dann, wenn sich das Objekt bezogen auf den Sensor bewegt. Der belegte und der freie Zustand des zu überwachenden Bereichs können daher jeweils mittels des Sensors auf eine zeitlich robuste Weise ohne schnelle Schwankungen nachgewiesen werden.

Gemäß einer Ausführungsform kann die Messgröße einen anhand der Detektionssignale geschätzten Wert für eine Abmessung (im Folgenden auch "geschätzte Abmessung") des Objekts umfassen. Der Eintrittsschwellenwert kann bei dieser Ausführungsform eine erste vorbestimmte Länge umfassen, während der Austrittsschwellenwert eine zweite vorbestimmte Länge umfassen kann. Die erste vorbestimmte Länge kann größer als die zweite vorbestimmte Länge sein. Der Austrittsschwellenwert kann beispielsweise als ein vorbestimmter Prozentanteil des Eintrittsschwellenwerts festgelegt werden. Der Eintrittsschwellenwert kann im Bereich einer minimalen zu erwartenden Objektgröße festgelegt werden.

Da bei dieser Ausführungsform der belegte Zustand des zu überwachenden Bereichs oder der Übergang in diesen mittels der Auswertungseinrichtung bei einer geschätzten Abmessung des Objekts oberhalb des Eintrittsschwellenwerts bzw. der ersten Länge angegeben wird, während der freie Zustand oder ein Übergang in diesen erst bei einer geschätzten Abmessung des Objekts unterhalb des kleineren Austrittsschwellenwerts bzw. der kleineren zweiten Länge mittels der Auswertungseinrichtung angegeben wird, ist für den Nachweis des freien oder belegten Zustands bzw. für die Übergänge zwischen diesen mittels des Sensors eine Hysterese vorgegeben. Diese Hysterese verhindert schnelle Wechsel zwischen der Angabe des freien und des belegten Zustands des zu überwachenden Bereichs und somit ein "Flackern" beim Ermitteln und Ausgeben des Überwachungszustands des Bereichs mittels des Sensors, auch wenn sich das Objekt bezogen auf den Sensor bewegt.

Bei dieser Ausführungsform braucht ferner neben der geschätzten Abmessung des Objekts keine weitere Größe von den Detektionssignalen abgeleitet zu werden, um den freien oder den belegten Zustand oder einen Übergang zwischen diesen mittels des Sensors anzugeben. Dies verringert den Aufwand bei der Auswertung der Detektionssignale.

Der Sensor umfasst erfindungsgemäß einen Lidar-Sensor, der die Sendesignale als Strahlen mit zumindest einem vorbestimmten Winkelabstand zwischen diesen in den zu überwachenden Bereich sendet. Der Eintrittsschwellenwert und der Austrittsschwellenwert sind anhand des zumindest einen Winkelabstands festgelegt. Die Sendesignale sind somit als diskrete Strahlen des Lidar-Sensors ausgebildet, welche den zu überwachenden Flächen- oder Raumbereich überdecken. Da der vorbestimmte Winkelabstand die Auflösung des Lidar-Sensors festlegt, können der Eintrittsschwellenwert und der Austrittsschwellenwert somit durch die Festlegung anhand des vorbestimmten Winkelabstands an die Auflösung des Lidar-Sensors angepasst werden. Dadurch kann die Robustheit des Sensors beim Ermitteln des freien oder belegten Zustands des zu überwachenden Bereichs verbessert werden.

Der Lidar-Sensor kann ferner als ein Mehrlagensensor ausgebildet sein, bei welchem der Winkelabstand zwischen mehreren benachbarten Strahlen in einer horizontalen Richtung und in einer vertikalen Richtung unterschiedlich ist. Die Auswertungseinrichtung kann ferner ausgebildet sein, eine horizontale Abmessung und eine vertikale Abmessung des Objekts in dem zu überwachenden Bereich anhand der Detektionssignale zu ermitteln. Der Eintrittsschwellenwert und der Austrittsschwellenwert können in Abhängigkeit von dem jeweiligen Winkelabstand benachbarter Strahlen jeweilige Werte aufweisen, die für die horizontale Richtung und die vertikale Richtung voneinander verschieden sind.

Ferner kann dabei die Auswertungseinrichtung ausgebildet sein, einen belegten Zustand des zu überwachenden Bereichs zu ermitteln und auszugeben, wenn die horizontale oder die vertikale Abmessung des Objekts größer als der jeweilige Eintrittsschwellenwert für die horizontale oder die vertikale Richtung ist, und einen freien Zustand des zu überwachenden Bereichs zu ermitteln und auszugeben, wenn die horizontale und die vertikale Abmessung des Objekts kleiner als der jeweilige Austrittsschwellenwert für die horizontale und die vertikale Richtung oder gleich diesem ist.

Der Winkelabstand zwischen benachbarten Strahlen kann in der horizontalen Richtung kleiner als in der vertikalen Richtung sein. Dementsprechend kann eine Differenz zwischen dem Eintrittsschwellenwert und dem Austrittsschwellenwert für die horizontale Richtung kleiner sein als für die vertikale Richtung.

Wenn der Lidar-Sensor als ein Mehrlagensensor ausgebildet ist, kann dieser somit zum Beispiel in zwei zueinander rechtwinklig angeordneten Richtungen eine unterschiedliche Auflösung aufweisen, wobei die Auflösung in der horizontalen Richtung erheblich höher als in der vertikalen Richtung sein kann. Der Eintrittsschwellenwert und der Austrittsschwellenwert für den Nachweis bzw. die Angabe des belegten bzw. des freien Zustands des zu überwachenden Bereichs können jeweils derart unterschiedliche Werte aufweisen, dass diese an die richtungsabhängige Auflösung bzw. den richtungsabhängigen Winkelabstand zwischen benachbarten Strahlen des Mehrlagensensors angepasst sind. Der Eintrittsschwellenwert und der Austrittsschwellenwert sind folglich keine konstanten Größen, sondern sie können sich zeitlich ändern und/oder für verschiedene Dimensionen, beispielsweise für die horizontale Richtung und die vertikale Richtung, einen unterschiedlichen Wert aufweisen.

Wenn der Austrittsschwellenwert relativ zu dem Eintrittsschwellenwert festgelegt wird, kann beispielsweise der Austrittsschwellenwert für die horizontale Richtung mit hoher Auflösung bzw. geringem Winkelabstand zwischen benachbarten Strahlen 90% des Eintrittsschwellenwerts betragen, während der Austrittsschwellenwert für die vertikale Richtung mit geringerer Auflösung bzw. größerem Winkelabstand zwischen benachbarten Strahlen nur 50% des entsprechenden Eintrittsschwellenwerts betragen kann. Mit anderen Worten weisen der Eintrittsschwellenwert und der Austrittsschwellenwert für die horizontale Richtung nahezu gleiche Werte auf, während sie für die vertikale Richtung deutlich voneinander verschieden sein können, hier beispielsweise um einen Faktor 2.

Die Auswertungseinrichtung kann ausgebildet sein, den Austrittsschwellenwert anhand eines geschätzten minimalen Werts für die zumindest eine Abmessung des Objekts festzulegen. Konkret kann der Austrittsschwellenwert derart festgelegt werden, dass er kleiner als der geschätzte minimale Wert für die zumindest eine Abmessung des Objekts ist und beispielsweise etwa 90% dieses Werts beträgt. Dadurch kann sichergestellt werden, dass die Auswertungseinheit stets einen belegten Zustand für den zu überwachenden Bereich ermittelt, sobald ein Objekt an irgendeiner Position innerhalb des zu überwachenden Bereichs den geschätzten minimalen Wert für eine seiner Abmessungen überschreitet.

Zusätzlich kann innerhalb des zu überwachenden Bereichs ein positionsabhängiger Fehler für die Schätzung der Abmessung des Objekts anhand der Detektionssignale ermittelt werden. Konkret kann beispielsweise bei einem Sensor, der diskrete Strahlen emittiert, ein Fehler für die Schätzung der Abmessung in Abhängigkeit von dem Abstand zwischen dem Objekt und Sensor angegeben werden. Der geschätzte minimale Wert für die zumindest eine Abmessung des Objekts kann auf der Ermittlung dieses positionsabhängigen Fehlers beruhen und somit ebenfalls von der Position innerhalb des zu überwachenden Bereichs abhängen.

Der Eintrittsschwellenwert und der Austrittsschwellenwert können ferner als durch einen Benutzer konfigurierbar ausgestaltet sein. Bei einer solchen Konfiguration sollte der Eintrittsschwellenwert bevorzugt anhand einer zu erwartenden Mindestgröße eines Objekts eingestellt werden, für welche der Sensor einen belegten Zustand des zu überwachenden Bereichs angeben soll. Der Austrittsschwellenwert sollte jedoch bevorzugt derart eingestellt werden, dass einerseits kein schneller Wechsel zwischen dem Nachweis bzw. der Angabe der Zustände "frei" und "belegt" für den zu überwachenden Bereich auftritt, da der Austrittsschwellenwert zu groß eingestellt ist, und dass andererseits keine unnötige Anfälligkeit gegenüber Störobjekten auftritt, da der Austrittsschwellenwert zu klein eingestellt ist.

Gemäß einer weiteren Ausführungsform, bei welcher der Sensor wiederum als Lidar-Sensor ausgebildet ist, der die Sendesignale als Strahlen mit zumindest einem vorbestimmten Winkelabstand zwischen diesen in den zu überwachenden Bereich sendet, kann die zumindest eine Messgröße eine Anzahl derjenigen Strahlen umfassen, die an zumindest einem Objekt in dem zu überwachenden Bereich reflektiert oder remittiert werden. Der Eintrittsschwellenwert kann eine erste vorbestimmte Anzahl detektierter Strahlen umfassen, während der Austrittsschwellenwert eine zweite vorbestimmte Anzahl detektierter Strahlen umfassen kann. Die erste vorbestimmte Anzahl ist dabei größer als die zweite vorbestimmte Anzahl.

Die Auswertungseinrichtung kann bei dieser Ausführungsform somit ausgebildet sein, den belegten und den freien Zustand des zu überwachenden Bereichs jeweils dann zu ermitteln, wenn die Anzahl der an dem zumindest einem Objekt reflektierten oder remittierten Strahlen größer bzw. kleiner als eine jeweilige vorbestimmte Anzahl ist. Im einfachsten Fall kann die erste vorbestimmte Anzahl auf Eins festgelegt sein, so dass der Nachweis bzw. die Angabe des freien Zustands bzw. eines Wechsels von "belegt" nach "frei" nur dann erfolgt, wenn kein Strahl des Sendesignals auf ein Objekt innerhalb des zu überwachenden Bereichs trifft. Alternativ kann die vorbestimmte Anzahl auf eine kleine ganze Zahl festgelegt sein, beispielsweise auf Zwei oder Drei, so dass maximal nur noch ein oder zwei Strahlen ein oder mehrere Objekte treffen dürfen, damit der freie Zustand bzw. der Wechsel von "belegt" nach "frei" für den zu überwachenden Bereich mittels der Auswertungseinrichtung ermittelt und ausgegeben wird. Dadurch wird die Robustheit bei der Ermittlung des korrekten Zustands des zu überwachenden Bereichs gegenüber Störobjekten erhöht.

Gemäß noch einer weiteren Ausführungsform, bei welcher der Sensor wiederum als Lidar-Sensor ausgebildet ist, der die Sendesignale als Strahlen mit zumindest einem vorbestimmten Winkelabstand zwischen diesen in den zu überwachenden Bereich sendet, kann die zumindest eine Messgröße eine mittels der Detektionssignale geschätzte Abmessung des Objekts und eine Anzahl derjenigen Strahlen umfassen, die an zumindest einem Objekt in dem zu überwachenden Bereich reflektiert oder remittiert werden.

Bei dieser Ausführungsform werden somit zwei Messgrößen anhand der Detektionssignale ermittelt, und zwar eine geschätzte Abmessung bzw. Größe zumindest eines Objekts und eine Anzahl an zumindest einem Objekt reflektierter oder remittierter Strahlen. Ferner kann sich jeweils einer der Schwellenwerte, d.h. der Eintritts- oder der Austrittsschwellenwert, auf eine der zwei Messgrößen beziehen, um den belegten oder den freien Zustand des zu überwachenden Bereichs zu ermitteln und auszugeben.

Zusätzlich kann die Auswertungseinrichtung ausgebildet sein, nur dann den freien Zustand des zu überwachenden Bereichs zu ermitteln und auszugeben bzw. nur dann in einen auszugebenden Überwachungszustand "frei" zu wechseln, wenn zwei innerhalb des Bereichs reflektierte oder remittierte Strahlen keine benachbarten Strahlen sind. Mit anderen Worten muss sich zwischen zwei solchen Strahlen zumindest ein weiterer Strahl befinden, der an keinem Objekt innerhalb des zu überwachenden Bereichs reflektiert oder remittiert wird. Die Anzahl der innerhalb des zu überwachenden Bereichs reflektierten oder remittierten Strahlen, die detektiert werden, beträgt bei dieser Ausführungsform somit mindestens zwei. Wenn die zwei innerhalb des Bereichs reflektierten oder remittierten Strahlen keine benachbarten Strahlen sind, erfolgt diese Reflexion oder Remission zufällig, d.h. mit hoher Wahrscheinlichkeit an zwei Störobjekten, die in dem zu überwachenden Bereich nicht nachgewiesen werden sollen. Bei dieser Ausführungsform wird somit die Robustheit gegenüber Störobjekten weiter verbessert.

Gemäß einer weiteren Ausführungsform kann die Auswertungseinrichtung ferner ausgebildet sein, mehrere Werte der Messgröße jeweils anhand der Detektionssignale für mehrere aufeinanderfolgende Zeitpunkte zu ermitteln. Die Auswertungseinrichtung kann ermitteln, dass der zu überwachende Bereich den belegten Zustand aufweist oder von dem freien Zustand in den belegten Zustand übergeht, wenn eine vorbestimmte Anzahl aufeinanderfolgender Werte für die zumindest eine Abmessung des Objekts, d.h. für die mehreren aufeinanderfolgenden Zeitpunkte, größer als der Eintrittsschwellenwert ist, und sie kann ermitteln, dass der zu überwachende Bereich den freien Zustand aufweist oder von dem belegten Zustand in den freien Zustand übergeht, wenn eine vorbestimmte Anzahl aufeinanderfolgender Werte der Messgröße, d.h. für mehrere aufeinanderfolgende Zeitpunkte, kleiner als der Austrittsschwellenwert ist.

Diese Ausführungsform verwendet somit das Prinzip der Mehrfachauswertung der Detektionssignale für mehrere Zeitpunkte, die aufeinander folgen. Die Anzahl der mittels der Auswertungseinrichtung ermittelten Werte, die den Eintrittsschwellenwert überschreiten bzw. den Austrittsschwellenwert unterschreiten, muss bei dieser Ausführungsform folglich größer als eine jeweilige vorbestimmte Anzahl sein, damit ein Wechsel von "frei" nach "belegt" oder umgekehrt für den Zustand des zu überwachenden Bereichs mittels der Auswertungseinrichtung ermittelt und ausgegeben werden kann. Dadurch wird die Robustheit des Sensors bzw. der Auswertung des Zustands des zu überwachenden Bereichs gegenüber zufälligen Schwankungen und Störobjekten verbessert.

Weiterer Gegenstand der Erfindung ist ein Verfahren zum Überwachen eines Bereichs bezüglich des Vorhandenseins mindestens eines Objekts mit den Merkmalen des Anspruchs 8. Gemäß dem Verfahren werden Sendesignale in den zu überwachenden Bereich emittiert und Detektionssignale empfangen, die solche Sendesignale umfassen, die in dem zu überwachenden Bereich reflektiert oder remittiert werden. Anhand der Detektionssignale wird zumindest eine Messgröße ermittelt, die mit zumindest einer Abmessung eines Objekts in dem zu überwachenden Bereich in Beziehung steht. Ein belegter Zustand des zu überwachenden Bereichs wird dann ermittelt und ausgegeben, wenn die zumindest eine Messgröße größer als ein Eintrittsschwellenwert ist, während ein freier Zustand des zu überwachenden Bereichs dann ermittelt und ausgegeben wird, wenn die zumindest eine Messgröße kleiner als ein Austrittsschwellenwert ist. Der Austrittsschwellenwert ist von dem Eintrittsschwellenwert verschieden.

Für das Verfahren gelten die Ausführungen zum Sensor entsprechend, dies gilt insbesondere hinsichtlich Vorteilen und bevorzugten Ausführungsformen. Weiterhin versteht es sich, dass sämtliche hierin genannten Merkmale miteinander kombinierbar sind, sofern nicht explizit etwas Gegenteiliges angegeben ist.

Nachfolgend wird die Erfindung beispielhaft anhand vorteilhafter Ausführungsformen unter Bezugnahme auf die beigefügten Figuren beschrieben. Es zeigen, jeweils schematisch:
- Fig. 1: eine Darstellung eines Sensors zum Überwachen eines vorbestimmten Bereichs,
- Fig. 2: ein Diagramm, das die Ermittlung einer Objektgröße in Abhängigkeit von der Entfernung des Objekts darstellt,
- Fig. 3: ein weiteres Diagramm, das die Ermittlung der Objektgröße in Abhängigkeit von der Entfernung des Objekts darstellt, und
- Fig. 4: ein Zustandsdiagramm zur Veranschaulichung eines Verfahrens zum Überwachen eines vorbestimmten Bereichs.

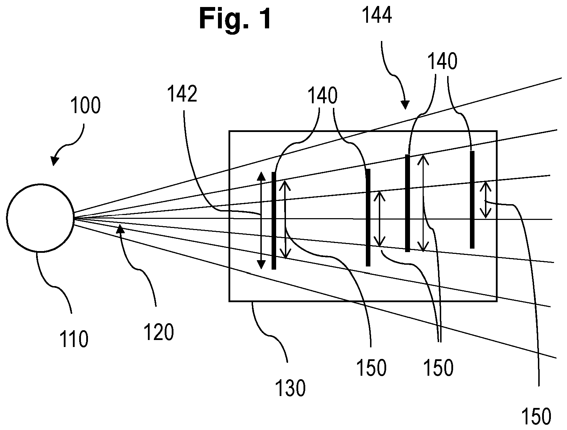

Fig. 1 zeigt schematisch einen Sensor 100, der als Lidar-System ausgebildet ist und eine Sendeeinrichtung 110 aufweist, die Sendesignale in der Form von diskreten Messstrahlen 120 in einen zu überwachenden Bereich 130 emittiert. Mittels der Sendeeinrichtung 110 erfolgt somit eine diskrete Abtastung des Bereichs 130 durch die Messstrahlen 120. Der Sensor 100 ist dafür vorgesehen, den Bereich 130 bezüglich des Vorhandenseins mindestens eines Objekts 140 zu überwachen, welches der Einfachheit halber in Fig. 1 durch eine Linie veranschaulicht ist. In Fig. 1 ist das Objekt 140 an verschiedenen Positionen innerhalb des zu überwachenden Bereichs 130 dargestellt, an denen das Objekt 140 jeweils unterschiedliche Entfernungen und unterschiedliche laterale Positionen bezüglich des Sensors 100 aufweist. Eine tatsächliche Größe bzw. Abmessung des Objekts 140 ist durch den Pfeil 142 veranschaulicht.

Der Sensor 100 umfasst ferner eine nicht dargestellte Empfangseinrichtung, die Detektionssignale empfängt, welche reflektierte oder remittierte Sendesignale umfassen. Die Sendesignale 120 werden innerhalb des zu überwachenden Bereichs 130 an dem Objekt 140 reflektiert oder remittiert, um die Detektionssignale zu erzeugen, die von der Empfangseinrichtung des Sensors empfangen werden.

Ferner weist der Sensor 100 eine nicht dargestellte Auswertungseinrichtung auf, die ausgebildet ist, eine Messgröße in der Form zumindest einer geschätzten Abmessung 150 des Objekts 140 in dem zu überwachenden Bereich 130 anhand der Detektionssignale zu ermitteln. Im Einzelnen ermittelt die Auswertungseinrichtung die geschätzte Abmessung 150 anhand eines Abstands bzw. einer Länge zwischen den zwei äußersten Messstrahlen 120, die jeweils auf das Objekt 140 auftreffen. Die Länge 150, die der geschätzten Abmessung des Objekts 140 in einer Raumrichtung entspricht, ist in Fig. 1 jeweils als Doppelpfeil für unterschiedliche Entfernungen des Objekts 140 bezüglich des Sensors 100 dargestellt.

Wie man in Fig. 1 erkennen kann, ändert sich die geschätzte Objektgröße bzw. Abmessung 150 des Objekts 140 mit dessen Entfernung bezüglich des Sensors 100, obwohl das Objekt 140 die konstante tatsächliche Größe bzw. Abmessung 142 aufweist. Die Ursache für diese Schwankung der geschätzten Abmessung 150 des Objekts 140 ist, dass die Schätzung der Abmessung 150 anhand der erfassten Lidar-Daten mit diskreten Winkelabständen zwischen den Messstrahlen 120 erfolgt, wobei die Distanz zwischen den Schnittpunkten zweier Messstrahlen 120 und dem Objekt 140 bei der jeweiligen Entfernung bezogen auf den Sensor 100 als geschätzte Abmessung 150 ermittelt wird. Aufgrund der begrenzten Winkelauflösung bzw. den endlichen Winkelabständen zwischen den diskreten Messstrahlen 120 ist es in der Regel nicht möglich, exakte Schnittpunkte zwischen einem von dem Sensor 100 ausgehenden imaginären Strahl und einer jeweiligen Kante des Objekts 140 zu erfassen.

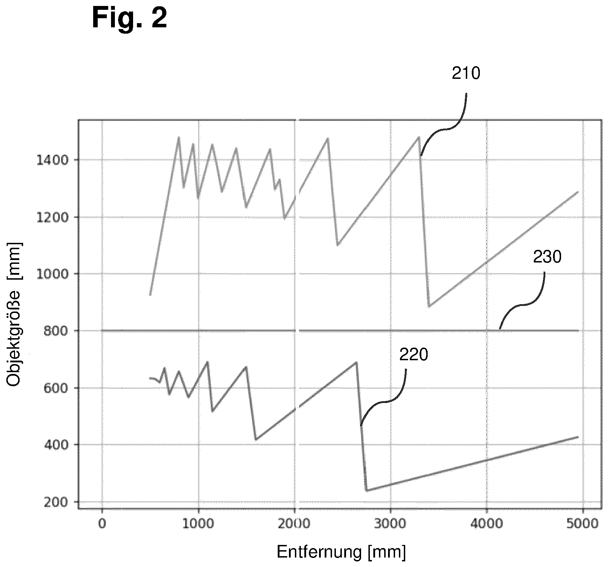

Die Schwankung der geschätzten Objektgröße oder Abmessung 150 des Objekts 140 mit dessen Entfernung bezüglich des Sensors 100 ist in dem in Fig. 2 dargestellten Diagramm veranschaulicht. Das Diagramm zeigt die mittels des Sensors 100 geschätzte Objektgröße bzw. Abmessung 150 des Objekts 140 in Abhängigkeit von der jeweiligen Entfernung des Objekts 140 bezüglich des Sensors 100. Die obere Kurve 210 in Fig. 2 wurde für ein Objekt 140 mit einer realen Größe bzw. Abmessung 142 von 1500 mm ermittelt. Wie man erkennen kann, nimmt die Kurve 210 als maximale Werte etwa die reale Objektgröße bzw. Abmessung von etwa 1500 mm an, und zwar dann, wenn die diskreten Messstrahlen 120 das Objekt 140 in einem Randbereich sehr nahe an einer jeweiligen Objektkante schneiden. Dies ist beispielsweise in Fig. 1 - von links betrachtet - bei der dritten Entfernung des Objekts 140 der Fall, die mit 144 bezeichnet ist.

Zwischen den jeweiligen Entfernungen bezüglich des Sensors 100, bei denen etwa die reale Objektgröße bzw. Abmessung des Objekts 140 geschätzt wird, weist die Kurve 210 für die geschätzte Objektgröße bzw. Abmessung 150 des Objekts 140 erhebliche Schwankungen auf, die mit der Entfernung des Objekts 140 bezüglich des Sensors zunehmen. In Fig. 2 beträgt die maximale Schwankung der Kurve 210 ungefähr 600 mm. Die geschätzte Objektgröße bzw. Abmessung 150 des Objekts 140 weist somit einen positionsabhängigen Fehler auf, der von dem Abstand zwischen dem Objekt 140 und dem Sensor 100 und somit von der Position des Objekts 140 innerhalb des Überwachungsbereichs 130 abhängt und einen maximalen Wert von ungefähr 600 mm aufweist.

Der Sensor 100 ist jedoch zum Überwachen des Bereichs 130 nur bezüglich des Vorhandenseins von Objekten 140 vorgesehen, so dass eine genaue Ermittlung der Objektgröße bzw. der Abmessung des Objekts 140 nicht erforderlich ist. Stattdessen soll der Sensor 100 lediglich nachweisen, ob ein Objekt 140 mit einer bestimmten Objektgröße bzw. Abmessung in dem Bereich 130 vorhanden ist oder nicht.

Bei einem solchen Nachweis von Objekten 140 sollten jedoch Objekte, die eine bestimmte Größe bzw. Abmessung unterschreiten und als Störobjekte bezeichnet werden, ausgeblendet werden. In dem Beispiel von Fig. 2 ist zusätzlich zu der Kurve 210, die einem nachzuweisenden Objekt 140 zugeordnet ist, eine Kurve 220 dargestellt, die einem Störobjekt mit einer Objektgröße bzw. Abmessung von 700 mm zugeordnet ist und eine geschätzte Größe bzw. Abmessung des Störobjekts angibt. Wie man wiederum in Fig. 2 erkennen kann, erreicht die Kurve 220 die reale Abmessung von 700 mm als jeweilige Maxima bei bestimmten Entfernungen des Störobjekts bezüglich des Sensors 100. Zwischen diesen Maxima tritt eine erhebliche Schwankung der geschätzten Objektgröße bzw. Abmessung des Störobjekts in Abhängigkeit von der Entfernung auf.

Um mittels des Sensors 100 nur solche Objekte 140 in dem Bereich 130 nachzuweisen, deren Vorhandensein in diesem Bereich 130 tatsächlich erwartet wird, und um den Einfluss von Störobjekten auszublenden, wird üblicherweise ein Schwellenwert für eine minimale Abmessung der Objekte 140 festgelegt, die in dem Bereich 130 nachgewiesen werden sollen. Mit anderen Worten werden bei der Überwachung des Bereichs 130 mittels des Sensors 100 nur solche Objekte 140 berücksichtigt, deren Objektgröße bzw. Abmessung diesen Schwellenwert für die minimale Abmessung des Objekts 140 überschreitet.

In Fig. 2 ist ein solcher Schwellenwert 230 durch die horizontale Linie bei einer Objektgröße von 800 mm dargestellt. In dem Beispiel von Fig. 2 werden folglich nur solche Objekte 140 bei der Überwachung des Bereichs 130 berücksichtigt, deren geschätzte Objektgröße bzw. Abmessung 150 größer als 800 mm ist. Das Störobjekt mit einer realen Objektgröße von 700 mm wird stattdessen bei der Überwachung des Bereichs 130 nicht berücksichtigt, da dessen geschätzte Objektgröße, die durch die Kurve 220 repräsentiert wird, stets unterhalb des Schwellenwerts 230 liegt.

Für das Objekt 140, das der Kurve 210 von Fig. 2 zugeordnet ist und das eine Objektgröße bzw. Abmessung von 1500 mm aufweist, kann die Auswertungseinrichtung des Sensors 100 eindeutig einen belegten Zustand des zu überwachenden Bereichs 130 ermitteln und ausgeben, da die Abmessung des Objekts 140 unabhängig von dessen Entfernung bezüglich des Sensors 100 stets größer als der Schwellenwert 230 von 800 mm geschätzt wird. Mit anderen Worten führt das Eintreten eines Objekts 140, dessen geschätzte Abmessung durch die Kurve 210 von Fig. 2 repräsentiert wird, in den Bereich 130 stets dazu, dass die Auswertungseinrichtung einen belegten Zustand des zu überwachenden Bereichs 130 angibt.

Umgekehrt ermittelt die Auswertungseinrichtung des Sensors 100 für das Störobjekt, das der Kurve 220 von Fig. 2 zugeordnet ist und das eine reale Objektgröße bzw. Abmessung von 700 mm aufweist, stets einen freien Zustand des zu überwachenden Bereichs 130, da die geschätzte Abmessung bzw. Objektgröße gemäß der Kurve 220 für sämtliche Entfernungen bezüglich des Sensors 100 unterhalb des Schwellenwerts 230 von 800 mm liegt. Mit anderen Worten sind die Objektgrößen des Objekts 140, dessen Vorhandensein bzw. Eintritt in den zu überwachenden Bereich 130 nachgewiesen werden soll, und des Störobjekts derart verschieden, dass das Störobjekt und das zu detektierende Objekt 140 voneinander unterscheidbar sind.

Wenn die Objektgrößen eines zu detektierenden Objekts 140 und eines Störobjekts jedoch in einem ähnlichen Bereich liegen und die Objektgröße eines Objekts 140 insbesondere nur geringfügig oberhalb des Schwellenwerts 230 liegt, sind Störobjekte und zu detektierende Objekte 140 möglicherweise nicht mehr unterscheidbar. Für ein bestimmtes Objekt kann die Auswertungseinrichtung möglicherweise nicht mehr eindeutig angeben, ob der zu überwachende Bereich 130 aufgrund dieses Objekts einen belegten oder einen freien Zustand annimmt.

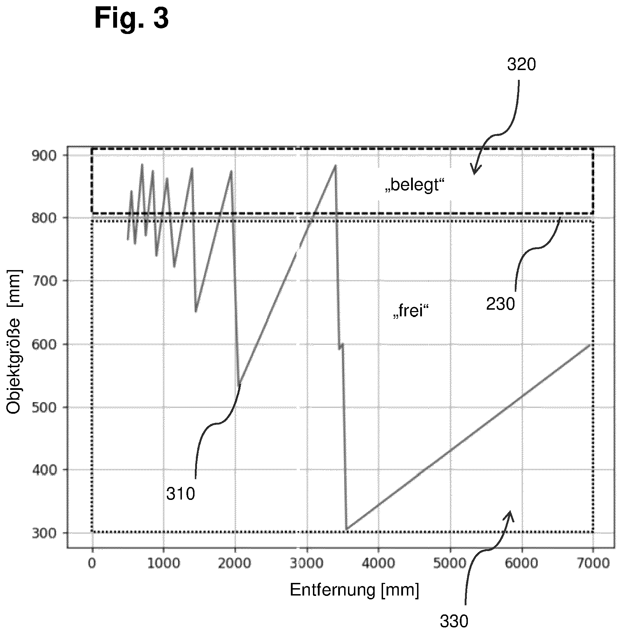

Derartiges ist in Fig. 3 veranschaulicht. Ebenso wie bei Fig. 2 wird ein Schwellenwert 230 von 800 mm für eine minimale Objektgröße verwendet. Ferner wird für die Schätzung der Objektgröße bzw. Abmessung in Fig. 3 ein Objekt mit einer realen Objektgröße 142 von 900 mm angenommen. Objekte 140 mit einer Objektgröße bzw. Abmessung größer als der Schwellenwert 230 sollen somit wiederum als zu detektierende Objekte angesehen werden, für welche die Auswertungseinrichtung des Sensors 100 einen belegten Zustand des zu überwachenden Bereichs 130 ermitteln soll. Die geschätzte Objektgröße bzw. Abmessung 150 für das Objekt 140 mit realer Abmessung von 900 mm ist in Fig. 3 in Abhängigkeit von der Entfernung des Objekts 140 bezüglich des Sensors 100 durch die Kurve 310 dargestellt.

Wie man in Fig. 3 erkennen kann, nimmt die Kurve 310 wiederum bei bestimmten Entfernungen maximale Werte im Bereich der realen Objektgröße bzw. Abmessung von 900 mm an. Zwischen diesen Maxima schwankt die Schätzung der Objektgröße jedoch in Abhängigkeit von der Entfernung des Objekts 140 bezüglich des Sensors 100 sehr stark. Bei der Ermittlung der Kurve 310 wurde ein Winkelabstand der Strahlen des Lidar-Systems von 5° angenommen. Dies entspricht dem üblichen Winkelabstand eines mehrlagigen Lidar-Sensors.

Ferner ist in Fig. 3 ein Bereich 320 oberhalb des Schwellenwerts 230 von 800 mm dargestellt, für den die Auswertungseinrichtung des Sensors 100 einen belegten Zustand des zu überwachenden Bereichs 130 ermittelt. Entsprechend ermittelt die Auswertungseinrichtung des Sensors 100 in einem Bereich 330 unterhalb des Schwellenwerts 230 einen freien Zustand des zu überwachenden Bereichs 130.

Da die Kurve 310 für einige Entfernungsbereiche oberhalb des Schwellenwerts 230 bzw. in dem Bereich 320 des belegten Zustands liegt und für andere Entfernungsbereiche unterhalb des Schwellenwerts 230 bzw. in dem Bereich 330 des freien Zustands des zu überwachenden Bereichs 130, hängt es für das Beispiel der Fig. 3 von der speziellen Entfernung des Objekts 140 bezüglich des Sensors 100 ab, ob die Auswertungseinrichtung des Sensors 100 einen freien oder einen belegten Zustand des zu überwachenden Bereichs 130 angibt. Für das Beispiel von Fig. 3 ist die Auswertungseinrichtung folglich nicht in der Lage, den belegten oder freien Zustand des zu überwachenden Bereichs 130 auf eindeutige Weise anzugeben, da die Objektgröße von 900 mm nur um 100 mm von dem Schwellenwert 230 von 800 mm verschieden ist und die Schwankungen der geschätzten Objektgröße 150 deutlich größer als die Differenz von 100 mm zwischen der tatsächlichen Objektgröße 142 und dem Schwellenwert 230 sind.

Wenn sich das Objekt 140 mit einer realen Objektgröße von 900 mm darüber hinaus innerhalb des zu überwachenden Bereichs 130 bewegt, liegt die geschätzte Objektgröße bzw. Abmessung 150 des Objekts 140 für bestimmte Zeitpunkte oberhalb des Schwellenwerts 230 in dem Bereich 320 des belegten Zustands und für andere Zeitpunkte unterhalb des Schwellenwerts 230 in dem Bereich 330 des freien Zustands, sobald sich die Entfernung des Objekts 140 oder auch die laterale Position des Objekts 140 bei dessen Bewegung ändert. Daher kann die Schätzung der Objektgröße gemäß dem Beispiel von Fig. 3 bei einer Bewegung des Objekts 140 dazu führen, dass die Auswertungseinrichtung des Sensors 100 während der Bewegung des Objekts 140 einen schnellen Wechsel zwischen dem belegten Zustand und dem freien Zustand des zu überwachenden Bereichs 130 ermittelt. Dieser schnelle zeitliche Wechsel wird auch als ein "Flackern" des Überwachungszustands des Bereichs 130 bezeichnet. Wenn der Sensor 100 beispielsweise in einem autonomen Fahrzeug verwendet wird, kann es beispielsweise während eines Bremsvorgangs eines solchen autonomen Fahrzeugs problematisch sein, wenn der Überwachungszustand eines Bereichs, der sich außerhalb eines solchen autonomen Fahrzeugs befindet, schnell zwischen den Zuständen "frei" und "belegt" wechselt bzw. flackert.

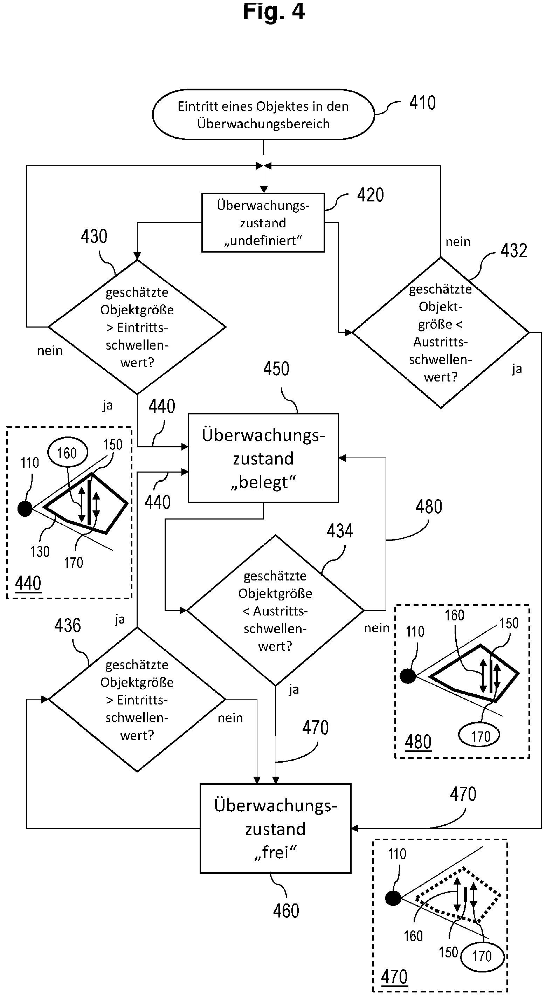

Um solche schnellen Wechsel zwischen der Ermittlung des belegten Zustands und des freien Zustands für den zu überwachenden Bereich 130 zu vermeiden, ist ein erfindungsgemäßes Verfahren bzw. eine erfindungsgemäße Konfiguration der Auswertungseinrichtung des Sensors 100 vorgesehen, wie diese in Fig. 4 dargestellt sind.

Bei 410 erfolgt der Eintritt eines Objekts 140 in den zu überwachenden Bereich bzw. Überwachungsbereich 130. Wie bei 420 angegeben ist, ist der Überwachungszustand des Bereichs 130 zu diesem Zeitpunkt undefiniert. Alternativ kann auch angenommen werden, dass der Überwachungszustand zunächst einen freien Anfangszustand aufweist, da sich zuvor kein Objekt 140 in dem Überwachungsbereich 130 befand.

Die Sendeeinrichtung 110 des Sensors 100 (vgl. Fig. 1 und in Fig. 4 die zusätzlichen Darstellungen in den gestrichelten Blöcken 440, 470 und 480) emittiert Sendesignale in der Form der Messstrahlen 120 in den Überwachungsbereich 130, und die Empfangseinrichtung des Sensors 100 empfängt Detektionssignale, die solche Sendesignale umfassen, die in dem Überwachungsbereich 130 reflektiert oder remittiert werden.

Anhand der Detektionssignale ermittelt die Auswertungseinrichtung des Sensors 100 eine geschätzte Objektgröße bzw. zumindest eine geschätzte Abmessung 150 des Objekts 140. Die Auswertungseinrichtung des Sensors 100 vergleicht die geschätzte Objektgröße 150 bei 430 mit einem Eintrittsschwellenwert 160 und bei 432 mit einem Austrittsschwellenwert 170 (vgl. die gestrichelten Blöcke 440 und 470) .

Ist die geschätzte Objektgröße bei 430 größer als der Eintrittsschwellenwert 160, ermittelt die Auswertungseinrichtung des Sensors 100 einen belegten Zustand 450 des Überwachungsbereichs 130 und gibt den belegten Zustand 450 aus. Wenn die geschätzte Objektgröße bei 430 jedoch kleiner als der Eintrittsschwellenwert 160 ist, bleibt der undefinierte Überwachungszustand 420 bestehen.

Dass die Bedingung für den Übergang zur Ausgabe des belegten Zustands 450 bzw. für den Übergang in den Überwachungszustand "belegt" bei 430 erfüllt ist, ist in Fig. 4 mit 440 bezeichnet und zusätzlich in dem gestrichelten Block 440 veranschaulicht. Der Block 440 zeigt die Sendeeinrichtung 110 des Sensors 100 mit dessen Sichtbereich, der durch zwei Begrenzungslinien dargestellt ist und den Überwachungsbereich 130 überdeckt. Zusätzlich ist die geschätzte Objektgröße bzw. Abmessung 150 dargestellt, die mittels der Auswertungseinrichtung des Sensors 100 ermittelt wird.

Block 440 zeigt ferner, dass die geschätzte Objektgröße bzw. Abmessung 150 des Objekts 140 größer als der Eintrittsschwellenwert 160 ist, der durch einen Doppelpfeil veranschaulicht ist. Daher wird für den Überwachungsbereich 130 der belegte Zustand 450 angegeben. Da für den Übergang zur Ausgabe des belegten Zustands 450 der Vergleich der geschätzten Objektgröße bzw. Abmessung 150 des Objekts 140 mit dem Eintrittsschwellenwert 160 maßgeblich ist, ist das Bezugszeichen 160 in Block 440 mit einer Umrandung hervorgehoben. Der belegte Zustand ist ferner in Block 440 durch eine durchgezogene Begrenzungslinie des Überwachungsbereichs 130 veranschaulicht.

Ist die geschätzte Objektgröße hingegen bei 432 kleiner als der Austrittsschwellenwert 170, ermittelt die Auswertungseinrichtung des Sensors 100 einen freien Zustand 460 des Überwachungsbereichs 130 und gibt den freien Zustand 460 aus. Wenn die geschätzte Objektgröße bei 432 jedoch größer als der Austrittsschwellenwert 170 ist, bleibt der undefinierte Überwachungszustand 420 bestehen.

Dass die Bedingung für den Übergang zur Ausgabe des freien Zustands 460 bzw. für den Übergang in den Überwachungszustand "frei" bei 432 erfüllt ist, ist in Fig. 4 mit 470 bezeichnet und zusätzlich in dem gestrichelten Block 470 veranschaulicht. Der Block 470 zeigt ebenso wie der Block 440 die Sendeeinrichtung 110 des Sensors 100 mit dessen Sichtbereich, den Überwachungsbereich 130, die geschätzte Objektgröße bzw. Abmessung 150 sowie den Eintritts- und den Austrittsschwellenwert 160 bzw. 170.

Block 470 zeigt ferner, dass die geschätzte Objektgröße bzw. Abmessung 150 des Objekts 140 kleiner als der Austrittsschwellenwert 170 ist, der wiederum durch einen Doppelpfeil veranschaulicht ist. Daher wird für den Überwachungsbereich 130 der freie Zustand 460 angegeben. Da für den Übergang zur Ausgabe des freien Zustands 460 der Vergleich der geschätzten Objektgröße bzw. Abmessung 150 des Objekts 140 mit dem Austrittsschwellenwert 170 maßgeblich ist, ist das Bezugszeichen 170 in Block 470 mit einer Umrandung hervorgehoben. Der freie Zustand ist in Block 470 durch eine gepunktete Begrenzungslinie des Überwachungsbereichs 130 veranschaulicht.

Nachdem entweder der belegte Zustand 450 oder der freie Zustand 460 des Überwachungsbereichs 130 erstmalig ermittelt wurde, wird der Überwachungsbereich 130 weiterhin mittels des Sensors 100 (vgl. Fig. 1) überwacht, z.B. mittels weiterer Scans eines Lidar-Sensors. Jeder neue Scan liefert weitere Detektionssignale, die eine erneute bzw. iterative Ermittlung der geschätzten Objektgröße bzw. Abmessung 150 des Objekts 140 ermöglichen. Daher wird bei den Blöcken 434 und 436 jeweils ausgehend von der momentanen Angabe des belegten Zustands 450 bzw. des freien Zustands 460 erneut überprüft, ob die neu geschätzte Objektgröße bzw. Abmessung 150 des Objekts 140 kleiner als der Austrittsschwellenwert 170 bzw. größer als der Eintrittsschwellenwert 160 ist. Dadurch wird festgestellt, ob bei der Angabe des Überwachungszustands ein Übergang von "belegt" nach "frei" oder umgekehrt erfolgen soll.

Wenn der belegte Zustand 450 des Überwachungsbereichs 130 ermittelt wurde, wird bei 434 überprüft, ob die geschätzte Objektgröße bzw. Abmessung 150 des Objekts 140 kleiner als der Austrittsschwellenwert 170 ist. Wenn dies nicht der Fall ist und die geschätzte Objektgröße bzw. Abmessung 150 somit größer als der Austrittsschwellenwert 170 ist, gibt die Auswertungseinrichtung des Sensors 100 weiterhin den belegten Zustand 450 des Überwachungsbereichs 130 aus.

Das Aufrechterhalten der Ausgabe des belegten Zustands 450 für den Überwachungsbereich 130 ist mit 480 bezeichnet und zusätzlich in dem gestrichelten Block 480 veranschaulicht. Der Block 480 zeigt ebenso wie die Blöcke 440 und 470 die Sendeeinrichtung 110 des Sensors 100 mit dessen Sichtbereich, den Überwachungsbereich 130, die geschätzte Objektgröße bzw. Abmessung 150 sowie den Eintritts- und den Austrittsschwellenwert 160 bzw. 170.

Die geschätzte Objektgröße bzw. Abmessung 150 des Objekts 140 ist in Block 480 zwar kleiner als der Eintrittsschwellenwert 160, aber größer als der Austrittsschwellenwert 170, der kleiner als der Eintrittsschwellenwert 160 festgelegt ist. Daher gibt die Auswertungseinrichtung des Sensors 100 weiterhin den belegten Zustand 450 für den Überwachungsbereichs 130 aus. Der belegte Zustand ist wiederum durch die durchgezogene Begrenzungslinie des Überwachungsbereichs 130 veranschaulicht.

Ist die geschätzte Objektgröße 150 bei 434 jedoch kleiner als der Austrittsschwellenwert 170, ermittelt die Auswertungseinrichtung des Sensors 100 den freien Zustand 460 des Überwachungsbereichs 130 und gibt den freien Zustand 460 aus. Dass die Bedingung für den Übergang zur Ausgabe des freien Zustands 460 bzw. für den Übergang in den Überwachungszustand "frei" bei 434 erfüllt ist, ist wiederum mit 470 bezeichnet. Diese Bedingung ist ebenfalls zusätzlich im gestrichelten Block 470 veranschaulicht. Aufgrund der erfüllten Bedingung 470 erfolgt somit nach 434 ein Wechsel von "belegt" nach "frei" bei der Ausgabe des Überwachungszustands.

Wenn hingegen zuvor der freie Zustand 460 des Überwachungsbereichs 130 ermittelt und ausgegeben wurde, wird bei 436 überprüft, ob die geschätzte Objektgröße bzw. Abmessung 150 des Objekts 140 größer als der Eintrittsschwellenwert 160 ist. Wenn dies der Fall ist und die geschätzte Objektgröße bzw. Abmessung 150 somit größer als der Eintrittsschwellenwert 160 ist, gibt die Auswertungseinrichtung des Sensors 100 den belegten Zustand 450 des Überwachungsbereichs 130 aus.

Mit anderen Worten erfolgt ein Wechsel von "frei" nach "belegt" bei der Ausgabe des Überwachungszustands, wenn die Bedingung von Block 436 erfüllt ist. Dies ist wiederum in Block 440 veranschaulicht, der zeigt, dass die geschätzte Objektgröße bzw. Abmessung 150 des Objekts 140 größer als der Eintrittsschwellenwert 160 ist.

Ist die geschätzte Objektgröße 150 bei 436 jedoch kleiner als der Eintrittsschwellenwert 160, ermittelt die Auswertungseinrichtung des Sensors 100 weiterhin den freien Zustand 460 des Überwachungsbereichs 130 und gibt den freien Zustand 460 aus. Die geschätzte Objektgröße 150 kann in diesem Fall entweder kleiner als der Austrittsschwellenwert 170 sein, wie dies bei 470 veranschaulicht ist, oder größer als Austrittsschwellenwert 170 und gleichzeitig kleiner als der Eintrittsschwellenwert 160, wie dies bei 480 gezeigt ist. Der Eintrittsschwellenwert 160 legt somit eine Mindestobjektgröße fest, die in dem Überwachungsbereich nachgewiesen werden muss, um für diesen den belegten Zustand 450 zu ermitteln.

Da der Austrittsschwellenwert 170 kleiner als der Eintrittsschwellenwert 160 festgelegt ist, erfolgt der Nachweis des freien und des belegten Zustands des Überwachungsbereichs 130 sowie der Nachweis eines Übergangs zwischen dem belegten und dem freien Zustand und umgekehrt mit einer Hysterese. Dadurch wird ein schneller Wechsel bzw. ein Flackern zwischen der Angabe des belegten und des freien Zustands bzw. umgekehrt vermieden. Somit kann der Zustand des Überwachungsbereichs 130 mittels der Auswertungseinrichtung des Sensors 100 auf zuverlässige bzw. zeitlich robuste Weise angegeben werden.

### Bezugszeichenliste

- 100: Sensor
- 110: Sendeeinrichtung
- 120: Messstrahl
- 130: zu überwachender Bereich
- 140: Objekt
- 142: tatsächliche Abmessung bzw. Größe des Objekts
- 144: spezieller Abstand des Objekts bezüglich des Sensors
- 150: geschätzte Objektgröße bzw. Abmessung des Objekts
- 160: Eintrittsschwellenwert
- 170: Austrittsschwellenwert
- 210: Kurve für die geschätzte Objektgröße eines zu detektierenden Objekts
- 220: Kurve für die geschätzte Objektgröße eines Störobjekts
- 230: Schwellenwert für die Objektgröße
- 310: Kurve für die geschätzte Objektgröße eines speziellen Objekts
- 320: Bereich für den belegten Zustand
- 330: Bereich für den freien Zustand
- 410: Eintritt eines Objekts in den Überwachungsbereich
- 420: undefinierter Überwachungszustand
- 430: Vergleich der Objektgröße mit dem Eintrittsschwellenwert
- 432: Vergleich der Objektgröße mit dem Austrittsschwellenwert
- 434: Vergleich der Objektgröße mit dem Austrittsschwellenwert
- 436: Vergleich der Objektgröße mit dem Eintrittsschwellenwert
- 440: Bedingung für den Übergang in den belegten Überwachungszustand erfüllt
- 450: belegter Überwachungszustand
- 460: freier Überwachungszustand
- 470: Bedingung für den Übergang in den freien Überwachungszustand erfüllt
- 480: Bedingung für das Aufrechterhalten des belegten Überwachungszustand erfüllt

## Patentansprüche

1. Sensor (100) zum Überwachen eines Bereichs (130) bezüglich des Vorhandenseins mindestens eines Objekts (140), umfassend:
eine Sendeeinrichtung (110), die Sendesignale in den zu überwachenden Bereich (130) emittiert,
eine Empfangseinrichtung, die Detektionssignale empfängt, die in dem zu überwachenden Bereich (130) reflektierte oder remittierte Sendesignale umfassen, und
eine Auswertungseinrichtung, die ausgebildet ist:
zumindest eine Messgröße, die mit zumindest einer Abmessung (142) eines Objekts (140) in dem zu überwachenden Bereich (130) in Beziehung steht, anhand der Detektionssignale zu ermitteln,
einen belegten Zustand (450) des zu überwachenden Bereichs (130) zu ermitteln und auszugeben, wenn die zumindest eine Messgröße größer als ein Eintrittsschwellenwert (160) ist, und
einen freien Zustand (460) des zu überwachenden Bereichs (130) zu ermitteln und auszugeben, wenn die zumindest eine Messgröße kleiner als ein Austrittsschwellenwert (170) ist,
wobei der Austrittsschwellenwert (170) von dem Eintrittsschwellenwert (160) verschieden ist,
**dadurch gekennzeichnet, dass**
der Sensor (100) einen Lidar-Sensor umfasst, der die Sendesignale als Strahlen mit zumindest einem vorbestimmtem Winkelabstand zwischen diesen in den zu überwachenden Bereich (130) sendet, und
der Eintrittsschwellenwert (160) und der Austrittsschwellenwert (170) anhand des zumindest einen vorbestimmten Winkelabstands festgelegt sind.

2. Sensor (100) nach Anspruch 1,
**dadurch gekennzeichnet, dass**
die zumindest eine Messgröße eine anhand der Detektionssignale geschätzte Abmessung (150) des Objekts (140) umfasst,
der Eintrittsschwellenwert (160) eine erste vorbestimmte Länge umfasst und der Austrittsschwellenwert (170) eine zweite vorbestimmte Länge umfasst und
die erste vorbestimmte Länge größer als die zweite vorbestimmte Länge ist.

3. Sensor (100) nach Anspruch 1 oder 2,
**dadurch gekennzeichnet, dass**
der Lidar-Sensor als Mehrlagensensor ausgebildet ist, bei welchem der Winkelabstand zwischen benachbarten Strahlen in einer horizontalen Richtung und in einer vertikalen Richtung unterschiedlich ist,
die Auswertungseinrichtung ferner ausgebildet ist, eine horizontale Abmessung und eine vertikale Abmessung des Objekts (140) in dem zu überwachenden Bereich (130) anhand der Detektionssignale zu ermitteln,
der Eintrittsschwellenwert (160) und der Austrittsschwellenwert (170) in Abhängigkeit von dem jeweiligen Winkelabstand benachbarter Strahlen jeweilige Werte aufweisen, die für die horizontale Richtung und die vertikale Richtung voneinander verschieden sind, und
die Auswertungseinrichtung ferner ausgebildet ist:
einen belegten Zustand (450) des zu überwachenden Bereichs (130) zu ermitteln und auszugeben, wenn die horizontale oder die vertikale Abmessung des Objekts (140) größer als der jeweilige Eintrittsschwellenwert (160) für die horizontale oder die vertikale Richtung oder gleich diesem ist, und
einen freien Zustand (460) des zu überwachenden Bereichs (130) zu ermitteln und auszugeben, wenn die horizontale und die vertikale Abmessung des Objekts (140) kleiner als der jeweilige Austrittsschwellenwert (170) für die horizontale und die vertikale Richtung oder gleich diesem ist.

4. Sensor (100) nach Anspruch 3,
**dadurch gekennzeichnet, dass**
der Winkelabstand zwischen benachbarten Strahlen in der horizontalen Richtung kleiner als in der vertikalen Richtung ist und
eine Differenz zwischen dem Eintrittsschwellenwert (160) und dem Austrittsschwellenwert (170) für die horizontale Richtung kleiner als für die vertikale Richtung ist.

5. Sensor (100) nach Anspruch 1,
**dadurch gekennzeichnet, dass**
die zumindest eine Messgröße eine Anzahl der Strahlen umfasst, die an zumindest einem Objekt (140) in dem zu überwachenden Bereich (130) reflektiert oder remittiert werden,
der Eintrittsschwellenwert (160) eine erste vorbestimmte Anzahl der Strahlen umfasst und der Austrittsschwellenwert (170) eine zweite vorbestimmte Anzahl der Strahlen umfasst und
die erste vorbestimmte Anzahl größer als die zweite vorbestimmte Anzahl ist oder gleich dieser ist.

6. Sensor (100) nach Anspruch 5,
**dadurch gekennzeichnet, dass**
die Auswertungseinrichtung ferner ausgebildet ist, den freien Zustand (460) des zu überwachenden Bereichs (130) nur dann zu ermitteln, wenn zwei innerhalb des Bereichs (130) reflektierte oder remittierte Strahlen keine benachbarten Strahlen sind.

7. Sensor (100) nach einem der Ansprüche 1 bis 6,
**dadurch gekennzeichnet, dass**
die Auswertungseinrichtung ferner ausgebildet ist:
mehrere Werte der Messgröße jeweils anhand der Detektionssignale für mehrere aufeinander folgende Zeitpunkte zu ermitteln,
zu ermitteln und auszugeben, dass der zu überwachende Bereich (130) den belegten Zustand (450) aufweist, wenn eine vorbestimmte Anzahl aufeinanderfolgender Werte der Messgröße größer als der Eintrittsschwellenwert (160) ist,
zu ermitteln und auszugeben, dass der zu überwachende Bereich (130) den freien Zustand (460) aufweist, wenn eine vorbestimmte Anzahl aufeinanderfolgender Werte der Messgröße kleiner als der Austrittsschwellenwert (160) ist.

8. Verfahren zum Überwachen eines Bereichs (130) bezüglich des Vorhandenseins mindestens eines Objekts (140), umfassend, dass:
Sendesignale in den zu überwachenden Bereich (130) emittiert werden,
Detektionssignale empfangen werden, die in dem zu überwachenden Bereich reflektierte oder remittierte Sendesignale umfassen,
zumindest eine Messgröße, die mit zumindest einer Abmessung (142) eines Objekts (140) in dem zu überwachenden Bereich (130) in Beziehung steht, anhand der Detektionssignale ermittelt wird,
ein belegter Zustand (450) des zu überwachenden Bereichs (130) ermittelt und ausgegeben wird, wenn die zumindest eine Messgröße größer als ein Eintrittsschwellenwert (160) ist, und
ein freier Zustand (460) des zu überwachenden Bereichs (130) ermittelt und ausgegeben wird, wenn die zumindest eine Messgröße kleiner als ein Austrittsschwellenwert (170) ist,
wobei der Austrittsschwellenwert (170) von dem Eintrittsschwellenwert (160) verschieden ist,
**dadurch gekennzeichnet, dass**
ein Lidar-Sensor die Sendesignale als Strahlen mit zumindest einem vorbestimmtem Winkelabstand zwischen diesen in den zu überwachenden Bereich (130) sendet und
der Eintrittsschwellenwert (160) und der Austrittsschwellenwert (170) anhand des zumindest einen vorbestimmten Winkelabstands festgelegt werden.

## Claims

1. A sensor (100) for monitoring a zone (130) with regard to the presence of at least one object (140), said sensor (100) comprising:
a transmission device (110) which emits transmission signals into the zone (130) to be monitored,
a reception device which receives detection signals that comprise transmission signals reflected or remitted in the zone (130) to be monitored, and
an evaluation device which is configured:
to determine at least one measurement variable based on the detection signals, said measurement variable being related to at least one dimension (142) of an object (140) in the zone (130) to be monitored,
to determine and output an occupied state (450) of the zone (130) to be monitored if the at least one measurement variable is greater than an entry threshold value (160), and
to determine and output a free state (460) of the zone (130) to be monitored if the at least one measurement variable is smaller than an exit threshold value (170),
wherein the exit threshold value (170) is different from the entry threshold value (160),
**characterized in that**
the sensor (100) comprises a lidar sensor which transmits the transmission signals as beams with at least a predetermined angular distance between them into the zone (130) to be monitored, and
the entry threshold value (160) and the exit threshold value (170) are defined based on the at least one predetermined angular distance.

2. A sensor (100) according to claim 1,
**characterized in that**
the at least one measurement variable comprises a dimension (150) of the object (140), said dimension (150) being estimated based on the detection signals,
the entry threshold value (160) comprises a first predetermined length and the exit threshold value (170) comprises a second predetermined length, and
the first predetermined length is greater than the second predetermined length.

3. A sensor (100) according to claim 1 or 2,
**characterized in that**
the lidar sensor is configured as a multi-layer sensor in which the angular distance between adjacent beams is different in a horizontal direction and in a vertical direction,
the evaluation device is further configured to determine a horizontal dimension and a vertical dimension of the object (140) in the zone (130) to be monitored based on the detection signals,
the entry threshold value (160) and the exit threshold value (170) have respective values in dependence on the respective angular distance of adjacent beams, said respective values being different from one another for the horizontal direction and the vertical direction, and
the evaluation device is further configured:
to determine and output an occupied state (450) of the zone (130) to be monitored if the horizontal dimension or the vertical dimension of the object (140) is greater than or equal to the respective entry threshold value (160) for the horizontal direction or the vertical direction, and
to determine and output a free state (460) of the zone (130) to be monitored if the horizontal dimension and the vertical dimension of the object (140) are smaller than or equal to the respective exit threshold value (170) for the horizontal direction and the vertical direction.

4. A sensor (100) according to claim 3,
**characterized in that**
the angular distance between adjacent beams in the horizontal direction is smaller than in the vertical direction and
a difference between the entry threshold value (160) and the exit threshold value (170) for the horizontal direction is smaller than for the vertical direction.

5. A sensor (100) according to claim 1,
**characterized in that**
the at least one measurement variable comprises a number of beams which are reflected or remitted at at least one object (140) in the zone (130) to be monitored,
the entry threshold value (160) comprises a first predetermined number of beams and the exit threshold value (170) comprises a second predetermined number of beams, and
the first predetermined number is greater than or equal to the second predetermined number.

6. A sensor (100) according to claim 5,
**characterized in that**
the evaluation device is further configured to determine the free state (460) of the zone (130) to be monitored only if two beams reflected or remitted within the zone (130) are not adjacent beams.

7. A sensor (100) according to any one of the claims 1 to 6,
**characterized in that**
the evaluation device is further configured:
to determine a plurality of values of the measurement variable, in each case based on the detection signals, for a plurality of consecutive points in time,
to determine and output that the zone (130) to be monitored has the occupied state (450) if a predetermined number of consecutive values of the measurement variable is greater than the entry threshold value (160),
to determine and output that the zone (130) to be monitored has the free state (460) if a predetermined number of consecutive values of the measurement variable is smaller than the exit threshold value (160).

8. A method for monitoring a zone (130) with regard to the presence of at least one object (140), said method comprising:
transmission signals being emitted into the zone (130) to be monitored,
detection signals being received that comprise transmission signals reflected or remitted in the zone to be monitored,
at least one measurement variable being determined based on the detection signals, said measurement variable being related to at least one dimension (142) of an object (140) in the zone (130) to be monitored,
an occupied state (450) of the zone (130) to be monitored being determined and output if the at least one measurement variable is greater than an entry threshold value (160), and
a free state (460) of the zone (130) to be monitored being determined and output if the at least one measurement variable is smaller than an exit threshold value (170),
wherein the exit threshold value (170) is different from the entry threshold value (160),
**characterized in that**
a lidar sensor transmits the transmission signals as beams with at least a predetermined angular distance between them into the zone (130) to be monitored, and
the entry threshold value (160) and the exit threshold value (170) are defined based on the at least one predetermined angular distance.

## Revendications

1. Capteur (100) destiné à surveiller une zone (130) en ce qui concerne la présence d'au moins un objet (140), comprenant :
un dispositif d'émission (110) qui émet des signaux d'émission vers la zone à surveiller (130),
un dispositif de réception qui reçoit des signaux de détection comprenant des signaux d'émission réfléchis ou renvoyés de la zone à surveiller (130),
et
un dispositif d'évaluation qui est conçu pour :
déterminer, à partir des signaux de détection, au moins une grandeur de mesure qui est en relation avec au moins une dimension (142) d'un objet (140) situé dans la zone à surveiller (130),
déterminer et émettre un état occupé (450) de la zone à surveiller (130) lorsque ladite au moins une grandeur de mesure est supérieure à une valeur seuil d'entrée (160), et
déterminer et émettre un état libre (460) de la zone à surveiller (130) lorsque ladite au moins une grandeur de mesure est inférieure à une valeur seuil de sortie (170),
la valeur seuil de sortie (170) étant différente de la valeur seuil d'entrée (160),
**caractérisé en ce que**
le capteur (100) comprend un capteur lidar qui émet les signaux d'émission sous forme de faisceaux, présentant au moins une distance angulaire prédéfinie entre eux, vers la zone à surveiller (130), et
la valeur seuil d'entrée (160) et la valeur seuil de sortie (170) sont fixées à partir de ladite au moins une distance angulaire prédéfinie.

2. Capteur (100) selon la revendication 1,
**caractérisé en ce que**
ladite au moins une grandeur de mesure comprend une dimension (150) de l'objet (140) estimée à partir des signaux de détection,
la valeur seuil d'entrée (160) comprend une première longueur prédéfinie, et la valeur seuil de sortie (170) comprend une deuxième longueur prédéfinie, et
la première longueur prédéfinie est supérieure à la deuxième longueur prédéfinie.

3. Capteur (100) selon la revendication 2,
**caractérisé en ce que**
le capteur lidar est conçu comme un capteur multicouche dans lequel la distance angulaire entre des faisceaux adjacents est différente dans une direction horizontale et dans une direction verticale,
le dispositif d'évaluation est en outre conçu pour déterminer, à partir des signaux de détection, une dimension horizontale et une dimension verticale de l'objet (140) situé dans la zone à surveiller (130),
la valeur seuil d'entrée (160) et la valeur seuil de sortie (170) présentent, en fonction de la distance angulaire respective entre des faisceaux adjacents, des valeurs respectives qui sont différentes l'une de l'autre pour la direction horizontale et pour la direction verticale, et
le dispositif d'évaluation est en outre conçu pour :
déterminer et émettre un état occupé (450) de la zone à surveiller (130) lorsque la dimension horizontale ou verticale de l'objet (140) est supérieure ou égale à la valeur seuil d'entrée respective (160) pour la direction horizontale ou verticale, et
déterminer et émettre un état libre (460) de la zone à surveiller (130) lorsque les dimensions horizontale et verticale de l'objet (140) sont inférieures ou égales aux valeurs seuils de sortie respectives (170) pour les directions horizontale et verticale.

4. Capteur (100) selon la revendication 3,
**caractérisé en ce que**
la distance angulaire entre des faisceaux adjacents dans la direction horizontale est inférieure à celle dans la direction verticale, et
une différence entre la valeur seuil d'entrée (160) et la valeur seuil de sortie (170) pour la direction horizontale est inférieure à celle pour la direction verticale.

5. Capteur (100) selon la revendication 1,
**caractérisé en ce que**
ladite au moins une grandeur de mesure comprend un nombre de faisceaux qui sont réfléchis ou renvoyés par au moins un objet (140) situé dans la zone à surveiller (130),
la valeur seuil d'entrée (160) comprend un premier nombre prédéfini de faisceaux, et la valeur seuil de sortie (170) comprend un deuxième nombre prédéfini de faisceaux, et
le premier nombre prédéfini est supérieur ou égal au deuxième nombre prédéfini.

6. Capteur (100) selon la revendication 5,
**caractérisé en ce que**
le dispositif d'évaluation est en outre conçu pour déterminer l'état libre (460) de la zone à surveiller (130) uniquement lorsque deux faisceaux réfléchis ou renvoyés à l'intérieur de la zone (130) ne sont pas des faisceaux adjacents.

7. Capteur (100) selon l'une des revendications 1 à 6,
**caractérisé en ce que**
le dispositif d'évaluation est en outre conçu pour :
déterminer plusieurs valeurs respectives de la grandeur de mesure à partir des signaux de détection pour plusieurs instants successifs,
déterminer et émettre que la zone à surveiller (130) présente l'état occupé (450) lorsqu'un nombre prédéfini de valeurs successives de la grandeur de mesure est supérieur à la valeur seuil d'entrée (160),
déterminer et émettre que la zone à surveiller (130) présente l'état libre (460) lorsqu'un nombre prédéfini de valeurs successives de la grandeur de mesure est inférieur à la valeur seuil de sortie (170).

8. Procédé pour surveiller une zone (130) en ce qui concerne la présence d'au moins un objet (140), consistant à :
émettre des signaux d'émission vers la zone à surveiller (130),
recevoir des signaux de détection comprenant des signaux d'émission réfléchis ou renvoyés de la zone à surveiller,
déterminer, à partir des signaux de détection, au moins une grandeur de mesure qui est en relation avec au moins une dimension (142) d'un objet (140) situé dans la zone à surveiller (130),
déterminer et émettre un état occupé (450) de la zone à surveiller (130) lorsque ladite au moins une grandeur de mesure est supérieure à une valeur seuil d'entrée (160), et
déterminer et émettre un état libre (460) de la zone à surveiller (130) lorsque ladite au moins une grandeur de mesure est inférieure à une valeur seuil de sortie (170),
la valeur seuil de sortie (170) étant différente de la valeur seuil d'entrée (160),
**caractérisé en ce que**
un capteur lidar émet les signaux d'émission sous forme de faisceaux,
présentant au moins une distance angulaire prédéfinie entre eux, vers la zone à surveiller (130), et
la valeur seuil d'entrée (160) et la valeur seuil de sortie (170) sont fixées à partir de ladite au moins une distance angulaire prédéfinie.
